(19) **Europäisches Patentamt**
**European Patent Office**
**Office européen des brevets**

(11) **EP 2 816 636 B1**

(12) **EUROPEAN PATENT SPECIFICATION**

(45) Date of publication and mention
of the grant of the patent:
**05.10.2016 Bulletin 2016/40**

(51) Int Cl.:
*H01M 2/16* *(2006.01)*   *H01M 4/66* *(2006.01)*
*H01M 10/42* *(2006.01)*   *H01M 4/02* *(2006.01)*

(21) Application number: **14172811.3**

(22) Date of filing: **17.06.2014**

(54) **Energy storage device and energy storage module**

Energiespeichervorrichtung und Energiespeichermodul

Dispositif de stockage d'énergie et module de stockage d'énergie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.06.2013   JP 2013128871
29.05.2014   JP 2014111289**

(43) Date of publication of application:
**24.12.2014 Bulletin 2014/52**

(73) Proprietor: **GS Yuasa International Ltd.
Kisshoin, Minami-ku,
Kyoto-shi, Kyoto 601-8520 (JP)**

(72) Inventors:
• **Miyazaki, Akihiko
Kyoto-shi
Kyoto 601-8520 (JP)**

• **Mori, Sumio
Kyoto-shi
Kyoto 601-8520 (JP)**
• **Kako, Tomonori
Kyoto-shi
Kyoto 601-8520 (JP)**
• **Nakai, Kenta
Kyoto-shi
Kyoto 601-8520 (JP)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
**US-A1- 2007 190 407     US-A1- 2007 224 496
US-A1- 2010 068 627     US-A1- 2011 136 010**

EP 2 816 636 B1

**Description**

FIELD

The present invention relates to a technique for restraining an energy storage device from rising in temperature when the device is crushed.

BACKGROUND

Hitherto, an energy storage device in which an energy storage element is held in a case has been known, the element being obtained by putting a negative electrode onto a positive electrode to interpose a separator therebetween (see, for example, JP-A-2010-171017).

US2010068627 A1 and US2011136010 A1 relate to nonaqueous electrolyte secondary batteries capable of suppressing occurrence of short-circuit caused by crush. The nonaqueous electrolyte secondary batteries include a positive electrode, a negative electrode, a porous insulating layer interposed between the positive electrode and the negative electrode; and a nonaqueous electrolyte. The positive electrode has a tensile extension percentage of equal to or higher than 3.0%.

US2007190407 A1 relates to a lithium secondary battery having enhanced safety, which includes an electrode group, a non-aqueous electrolyte and a battery can for housing them. The electrode group includes: a positive electrode having a strip-shaped positive electrode current collector and a material mixture layer carried thereon; a negative electrode having a strip-shaped negative electrode current collector and a material mixture layer carried thereon; a separator; and a porous heat resistant layer. The positive and negative electrodes are spirally wound with the separator and the porous heat resistant layer interposed there between. An outermost surface of the electrode group includes an exposed portion of either of the positive and negative electrode current collectors.

US2007224496 A1 relates to a separator and a lithium rechargeable battery using the separator, and more particularly, to a separator in which a plurality of porous films having different strength from one another is disposed between a positive electrode plate and a negative electrode plate, thereby retaining an electrolyte due to a space formed among the porous films and improving stability by preventing an electrical short occurring between the two electrode plates of the electrode assembly.

In this technique in the prior art, the energy storage device is improved in safety against the crush thereof by specifying the tensile elongation percentage of the positive electrode.

However, only by specifying the tensile elongation percentage of the positive electrode, a short circuit between the positive and negative electrodes cannot be sufficiently restrained when a storage battery is used in an abnormal and unpredictable way and crushed. For such reasons, according to the prior art, when an energy storage device is crushed, it is difficult to restrain a rise in the temperature of the energy storage device sufficiently.

SUMMARY

In the present specification, a technique is provided for restraining an energy storage device from rising in temperature when the device is used in an abnormal and unpredictable way and crushed.

The energy storage device according to an aspect of the invention, which is disclosed in the specification, is a device including: a positive electrode in which a positive composite layer containing a positive composite is formed on a positive electrode substrate; a negative electrode in which a negative composite layer containing a negative composite is formed on a negative electrode substrate; a separator interposed between the positive and negative electrodes, the separator comprising a substrate and a heat-resistant layer containing heat-resistant particles and formed on the substrate; and a case which holds therein the positive electrode, the negative electrode, and the separator, and is in the form of a substantially rectangular parallelepiped to have a pair of long side faces and a pair of short side faces. A direction along a first edge of the long side face, the first edge partially constituting the entire circumferential edge of the long side face, is defined as a first direction, and a direction along a second edge of the long side face, the second edge being orthogonal to the first edge, is defined as a second direction. A value of a ratio of a tensile elongation in the first direction of the separator to a tensile elongation in the first direction of the positive electrode substrate is from 4 to 68 in a state where the positive electrode and the separator are held in the case. A value of a ratio of a tensile elongation in the second direction of the separator to a tensile elongation in the second direction of the positive electrode substrate is from 4 to 68 in the state where the positive electrode and the separator are held in the case. A value of a ratio of a thickness of the heat-resistant layer to a thickness of the positive electrode substrate is from 0.25 to 0.70. A proportion by mass of the heat-resistant particles contained in the heat-resistant layer is from 30 to 99% by mass of the heat-resistant layer.

BRIEF DESCRIPTION OF THE DRAWINGS

Fig. 1 is a perspective view illustrating an energy storage device according to one embodiment of the present invention;

Fig. 2 is a sectional view showing a cross section of the energy storage device that is obtained by cutting this device along a plane orthogonal to long side faces of the device;

Fig. 3 is a partially enlarged sectional view of the energy storage device, which illustrates a state where its positive electrode, separator, and negative electrode are superimposed onto each other;

Fig. 4 is a schematic view illustrating the energy storage device in the state where the device is subjected to a round bar crush test along a first direction; and

Fig. 5 is a schematic view illustrating the energy storage device in the state where the device is subjected to a round bar crush test along a second direction.

DETAILED DESCRIPTION

Summary of Embodiments:

A description is first made about the summary of an energy storage device according to one aspect of the present invention.

The energy storage device according to one aspect of the present invention is an energy storage device including: a positive electrode in which a positive composite layer containing a positive composite is formed on a positive electrode substrate, a negative electrode in which a negative composite layer containing a negative composite is formed on a negative electrode substrate, a separator interposed between the positive and negative electrodes, the separator comprising a substrate and a heat-resistant layer containing heat-resistant particles and formed on the substrate, and a case which holds therein the positive electrode, the negative electrode, and the separator, and is in the form of a substantially rectangular parallelepiped to have a pair of long side faces and a pair of short side faces. A direction along a first edge of the long side face, the first edge partially constituting the entire circumferential edge of the long side face, is defined as a first direction, and a direction along a second edge of the long side face, the second edge being orthogonal to the first edge, is defined as a second direction. A value of a ratio of a tensile elongation in the first direction of the separator to a tensile elongation in the first direction of the positive electrode substrate is from 4 to 68 in a state where the positive electrode and the separator are held in the case. A value of a ratio of a tensile elongation in the second direction of the separator to a tensile elongation in the second direction of the positive electrode substrate is from 4 to 68 in the state where the positive electrode and the separator are held in the case. A value of a ratio of a thickness of the heat-resistant layer to a thickness of the positive electrode substrate is from 0.25 to 0.70. A proportion by mass of the heat-resistant particles contained in the heat-resistant layer is from 30 to 99% by mass of the heat-resistant layer.

This energy storage device can be restrained from rising in temperature when crushed. It is presumed that this advantage is produced by a mechanism as described hereinafter. When this energy storage device is crushed, the positive electrode substrate is initially broken earlier than the separator. In this way, inside the energy storage device, the positive electrode is turned into the state of being cut into plural pieces while the shape of the separator is maintained. As a result, a direct contact between the positive and negative electrodes can be first restrained. This restraint makes it possible to restrain a short circuit current from flowing between the positive and negative electrodes.

The separator can be produced by a known method such as a wet method or a dry method. The wet method is, for example, as follows. First, a polymer is mixed with a substance to be extracted, such as liquid paraffin, and the resultant mixture is heated to be melted. At this time, a powder may be further mixed with this mixture. Thereafter, the melt is made into a sheet while cooled. In this way, the polymer and the substance to be extracted are phase-separated from each other. Thereafter, a good solvent for the substance to be extracted is used to extract the substance. In a case where the powder has been mixed, the powder is also extracted. This step can result in the formation of a porous structure in the sheet. After the extraction of the substance to be extracted for forming the porous structure, the sheet may be drawn into a film form. After the drawing of the sheet into the film form, the substance to be extracted and the optional powder may be extracted to form the porous structure.

The dry method is, for example, as follows. A polymer is first heated to be melted. Thereafter, the melt is made into a sheet while cooled. At this time, the workpiece is annealed under predetermined conditions to control a lamella structure of a crystal produced in the sheet. By drawing this sheet, cleavage is caused at interfaces between its lamellae. In this way, a porous film can be formed.

Even when the separator is fractured to cause a situation that the positive and negative electrodes directly contact each other, the positive electrode is turned into the state of being cut into plural pieces earlier than the separator.

Consequently, the area of a contact region where the two electrodes directly contact each other to cause a short circuit can be decreased. This matter makes it possible to restrain a short circuit current even when the energy storage device is crushed. It is presumed that this restraint of the short circuit current can restrain the energy storage device from rising in temperature.

As described above, according to the technique disclosed in the present specification, the energy storage device can be restrained from rising in temperature when crushed.

The energy storage device may have a structure in which the value of the ratio of the product of the tensile fracture strength in the first direction of the separator and the thickness of the separator to the product of the tensile fracture strength in the first direction of the positive electrode substrate and the thickness of the positive electrode substrate is from 0.40 to 1.12 in the state where the positive electrode and the separator are held in the case; and the value of the ratio of the product of the tensile fracture strength in the second direction of the separator and the thickness of the separator to the product of the tensile fracture strength in the second direction of the positive electrode substrate and the thickness of the positive electrode substrate is from 0.40 to 1.12 in the state where the positive electrode and the separator are held in the case.

This energy storage device makes it possible to be further restrained from rising in temperature when crushed. It is presumed that this advantage is produced by a matter that the device has a structure in which the positive electrode substrate is fractured earlier than the separator when the device is crushed.

The energy storage device may have a structure in which the negative composite layer contains styrene-butadiene rubber (SBR).

This energy storage device makes it possible to be even further restrained from rising in temperature when crushed. It is presumed that this advantage is produced by the following: when the temperature of the energy storage device rises, a decomposition reaction on the negative electrode of the device is restrained so that heat generated by the decomposition reaction is restrained.

The heat-resistant particles may show a weight reduction of 5% or less at 500°C in the atmosphere.

The tensile elongation and the tensile fracture strength in the first direction of the separator, and the tensile elongation and the tensile fracture strength in the second direction of the separator may be measured in accordance with JIS K 7161-1994.

The tensile elongation and the tensile fracture strength in the first direction of the positive electrode substrate, and the tensile elongation and the tensile fracture strength in the second direction of the positive electrode substrate may be measured in accordance with JIS Z 2241-2011.

The value of the ratio of the tensile elongation in the first direction of the separator to the tensile elongation in the first direction of the positive electrode substrate is preferably from 15 to 48 in the state where the positive electrode and the separator are held in the case.

The value of the ratio of the tensile elongation in the second direction of the separator to the tensile elongation in the second direction of the positive electrode substrate is preferably from 15 to 48 in the state where the positive electrode and the separator are held in the case.

The value of the ratio of the thickness of the heat-resistant layer to the thickness of the positive electrode substrate is preferably from 0.30 to 0.60.

The value of the ratio of the thickness of the heat-resistant layer to the thickness of the positive electrode substrate is preferably from 0.40 to 0.60.

The proportion by mass of the heat-resistant particles contained in the heat-resistant layer is preferably from 50 to 97% by mass of the heat-resistant layer. The proportion by mass of the heat-resistant particles contained in the heat-resistant layer is more preferably from 81 to 95% by mass of the heat-resistant layer.

The value of the ratio of the product of the tensile fracture strength in the first direction of the separator and the thickness of the separator to the product of the tensile fracture strength in the first direction of the positive electrode substrate and the thickness of the positive electrode substrate is preferably from 0.48 to 0.96 in the state where the positive electrode and the separator are held in the case. The value of the ratio of the product of the tensile fracture strength in the second direction of the separator and the thickness of the separator to the product of the tensile fracture strength in the second direction of the positive electrode substrate and the thickness of the positive electrode substrate is preferably from 0.48 to 0.96 in the state where the positive electrode and the separator are held in the case.

The value of the ratio of the product of the tensile fracture strength in the first direction of the separator and the thickness of the separator to the product of the tensile fracture strength in the first direction of the positive electrode substrate and the thickness of the positive electrode substrate is preferably from 0.64 to 0.80 in the state where the positive electrode and the separator are held in the case. The value of the ratio of the product of the tensile fracture strength in the second direction of the separator and the thickness of the separator to the product of the tensile fracture strength in the second direction of the positive electrode substrate and the thickness of the positive electrode substrate is preferably from 0.64 to 0.80 in the state where the positive electrode and the separator are held in the case.

The energy storage module according to another aspect of the present invention is an energy storage module including the energy storage device according to an aspect of the present invention.

<Embodiment 1>

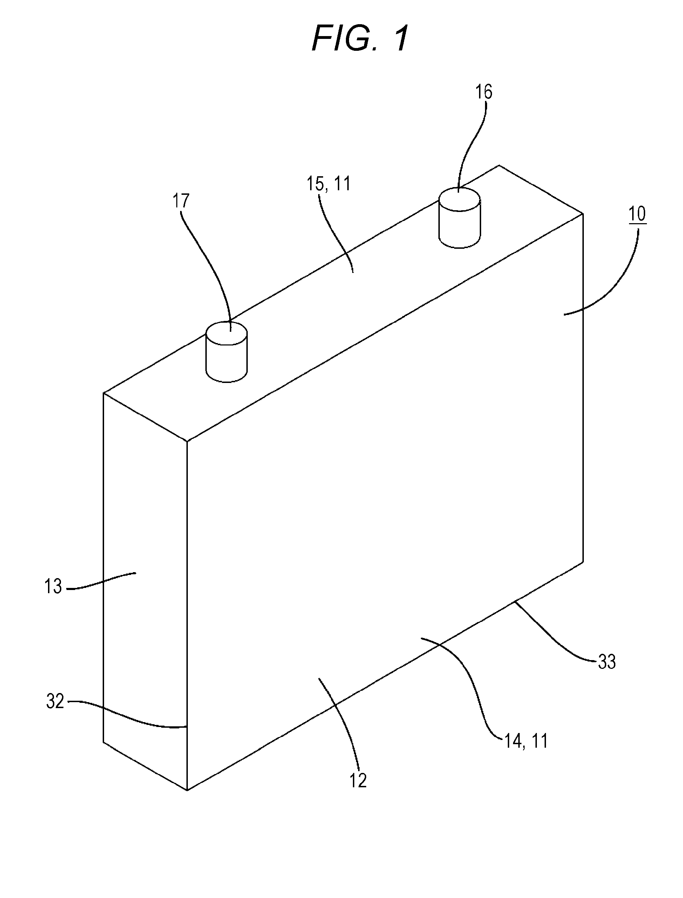

Hereinafter, with reference to Figs. 1 to 5, embodiment 1 of the present invention will be described. An energy storage device 10 according to embodiment 1 is used as a power source in the state of being mounted in a vehicle (not illustrated) such as an electric vehicle or a hybrid car. The energy storage device 10 according to embodiment 1 is a lithium ion battery, and has a case 11, and the following members held in the case 11: a positive electrode 18, a negative electrode 19, two separators 21 and an electrolytic solution 26. The energy storage device 10 is not limited to any lithium ion battery, and any storage battery can be selected as required.

Case 11:

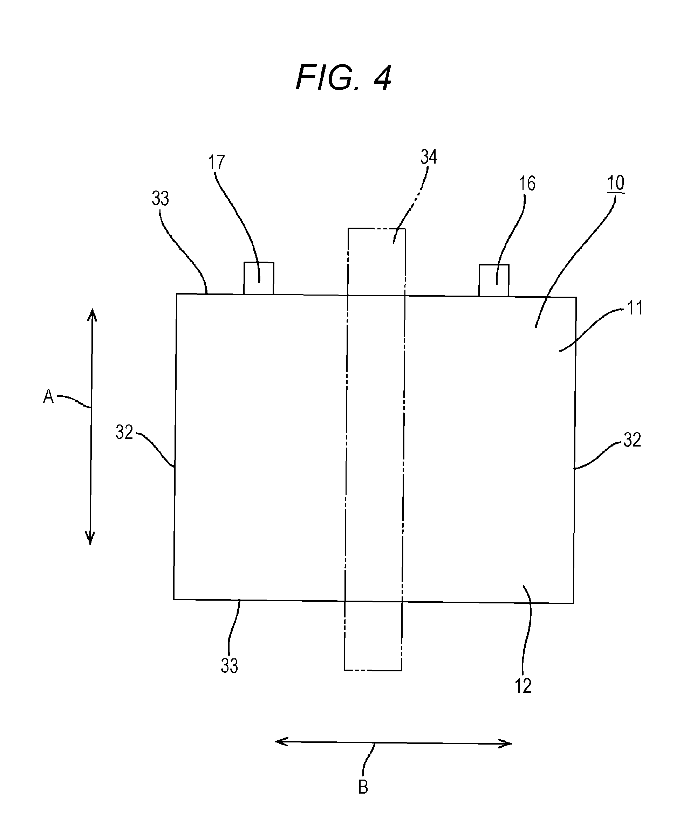

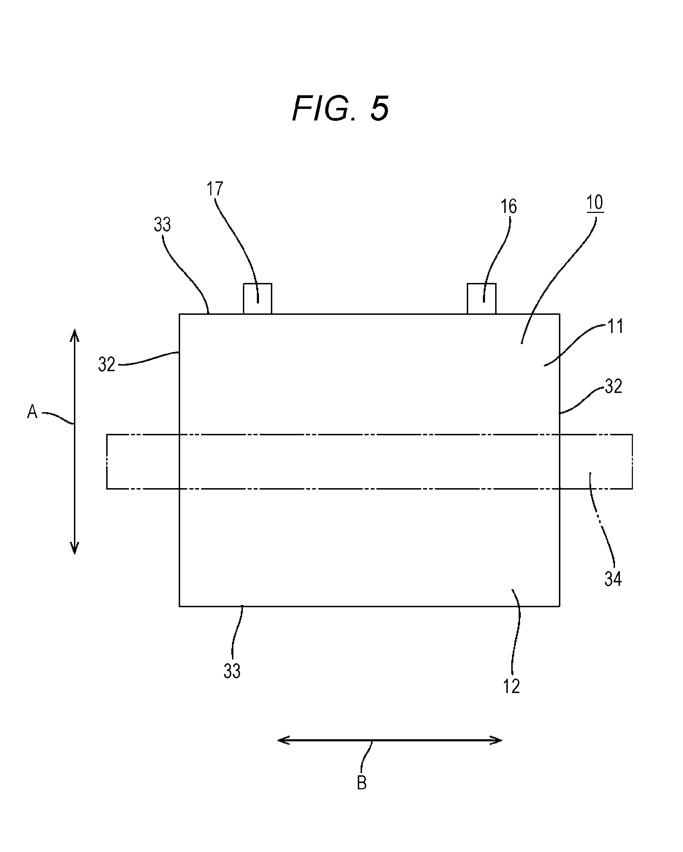

As illustrated in Fig. 1, the case 11 is in the form of a flat rectangular parallelepiped, and is made of a metal. The case 11 has a pair of long side faces 12 and a pair of short side faces 13. For the metal which the case 11 is made of, any metal such as iron, an iron alloy, aluminum, or an aluminum alloy can be selected as required.
The case 11 has a case body 14 having an opening at the upper thereof, and a lid 15 attached to this case body 14 to cover the opening. A positive electrode terminal 16 and a negative electrode terminal 17 are located on the upper surface of the lid 15 to be projected upwards. The positive electrode terminal 16 is connected electrically to the positive electrode 18 in a known way inside the case 11. The negative electrode terminal 17 is connected electrically to the negative electrode 19 in a known way inside case 11. The dimensions of the case according to the present embodiment are 10 cm x 8 cm x 1.5 cm.
In the present embodiment, a direction along a short side 32 extending vertically, out of sides constituting the entire circumferential edge of either one of the long side faces 12, is defined as a first direction (direction represented by an arrow A in each of Figs. 4 and 5); and a direction along a long side 33 orthogonal to the short side 32, out of the sides constituting the entire circumferential edge of the long side face 12, is defined as a second direction (direction represented by an arrow B in each of Figs. 4 and 5).

Energy storage element 20:

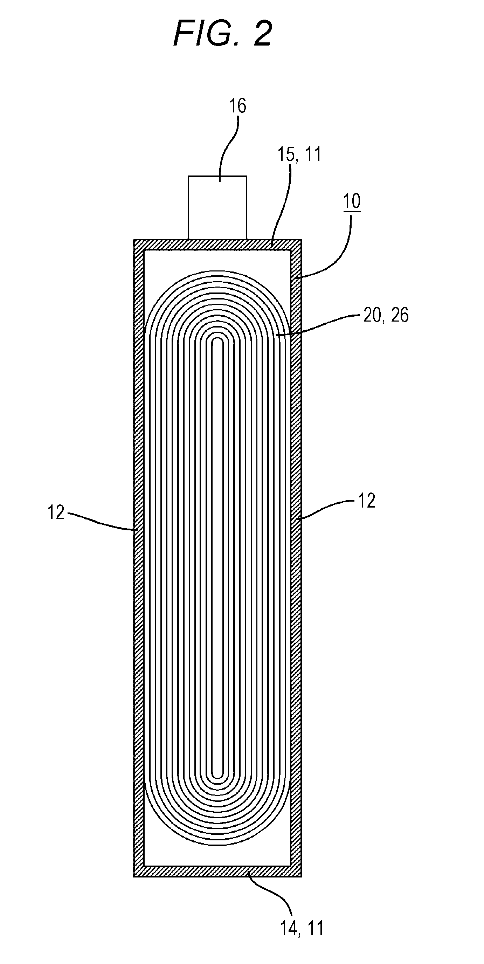

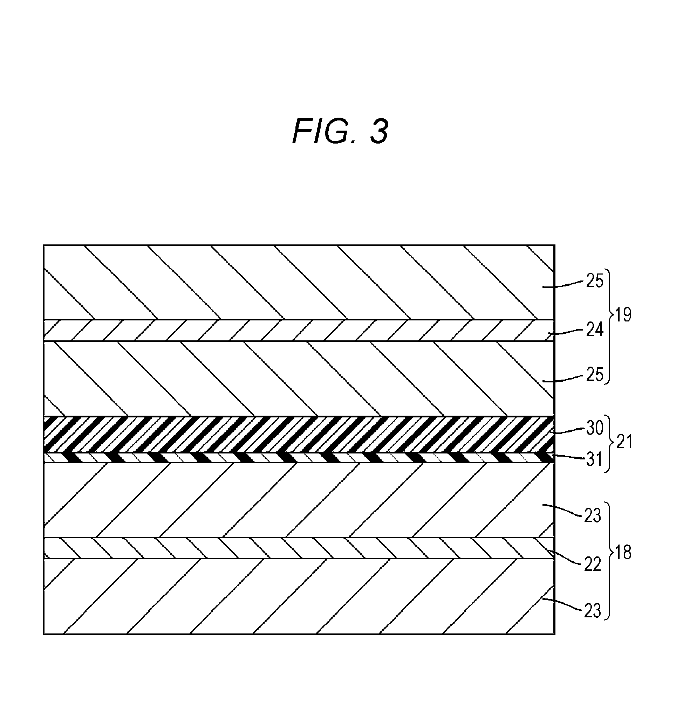

As illustrated in Fig. 2, an energy storage element 20 is held inside the case 11, the element 20 being an element obtained by laminating, onto the positive electrode 18, one of the separators 21, the negative electrode 19 and the other separator 21 in this order, and then winding up the whole of the resultant laminate. The electrolytic solution 26 is injected into the case 11. Inside the case 11, the energy storage element 20 according to the present embodiment is held to have a posture that the winding axis of the energy storage element 20 is directed to the second direction (direction along the long sides of either one of the long side faces).
As illustrated in Fig. 3, the positive electrode 18 is an electrode in which a positive composite layer 23 is formed on one or each of two opposite surfaces of a positive electrode substrate 22. The negative electrode 19 is an electrode in which a negative composite layer 25 is formed on one or each of two opposite surfaces of a negative electrode substrate 24. The positive composite layer 23 and the negative composite layer 25 are put onto each other to interpose one of the separators 21 therebetween.

Positive electrode 18:

The positive electrode substrate 22 is in the form of a foil piece made of a metal. The positive electrode substrate 22 according to the present embodiment is made of aluminum or an aluminum alloy. The thickness of the positive electrode substrate 22 is preferably from 5 to 20 $\mu$m. The thickness of the positive electrode substrate 22 according to the present embodiment is 15 $\mu$m.
The tensile elongation and the breaking strength of the positive electrode substrate 22 can be adjusted by deforming the positive electrode substrate 22 plastically. Thus, the tensile elongation and the breaking strength are controllable by adjusting the press pressure or the press ratio when the positive electrode 18 is formed.
The positive composite layer 23 containing a positive composite is formed on one or each of the surfaces of the positive electrode substrate 22. In an example of the present embodiment, the positive composite layer 23 is formed on each of the surfaces of the positive electrode substrate 22. The positive composite contains a positive active material, a conductive additive, and a binder.
The positive active material may be any known material as far as the material is a positive active material capable of occluding and releasing lithium ions. The positive active material may be, for example, a polyanion compound such as $LiMPO_4$, $LiMSiO_4$ or $LiMBO_3$ in which M represents one or more transition metal elements selected from Fe, Ni, Mn, Co and others; a spinel compound such as lithium titanate or lithium manganate; or a lithium transition metal oxide such as $LiMO_2$ in which M represents one or more transition metal elements selected from Fe, Ni, Mn, Co and others.

The conductive additive is not particularly limited about the kind thereof, and may thus be a metal or a nonmetal. The metal conductive additive may be a material containing a metal element such as Cu or Ni. The nonmetal conductive additive may be a carbon material such as graphite, carbon black, acetylene black or ketjen black.

The binder is not particularly limited about the kind thereof as far as the binder is a material stable against a solvent used when the electrodes are produced and the electrolytic solution 26, and further stable against redox reaction caused when the resultant energy storage device is charged and discharged. Examples of the binder include thermoplastic resins, such as polytetrafluoroethylene (PTFE), polyvinylidene fluoride (PVDF), polyethylene and polypropylene; and polymers having rubber elasticity, such as an ethylene-propylene-diene terpolymer (EPDM), sulfonated EPDM, styrene-butadiene rubber (SBR), and a fluorine-containing rubber. These may be used alone or in the form of a mixture of two or more thereof.

A viscosity modifier may be incorporated into the positive composite as required. As the viscosity modifier, any viscosity-modifying compound, such as carboxymethylcellulose (CMC) and N-methylpyrrolidone (NMP), can be selected as required.

Negative electrode 19:

The negative electrode substrate 24 is in the form of a foil piece made of a metal. The negative electrode substrate 24 according to the present embodiment is made of copper or a copper alloy. The thickness of the negative electrode substrate 24 is preferably from 5 to 20 $\mu$m. The thickness of the negative electrode substrate 24 according to the present embodiment is 10 $\mu$m.

The negative composite layer 25 containing a negative composite is formed on one or each of the surfaces of the negative electrode substrate 24. In an example of the present embodiment, the negative composite layer 25 is formed on each of the surfaces of the negative electrode substrate 24. The negative composite contains a negative active material, a conductive additive, and a binder.

The conductive additive, the binder, the viscosity modifier and others that are used in the negative electrode 19 can be appropriately selected from those used in the positive electrode 18. Thus, any description thereon is omitted.

Examples of the negative active material include carbon materials, elements that can be alloyed with lithium, alloys, metal oxides, metal sulfides, and metal nitrides. Examples of the carbon materials include hard carbon, soft carbon, and graphite. Examples of the elements, which can each be combined with lithium to be made into an alloy, include Al, Si, Zn, Ge, Cd, Sn, and Pb. These may be contained alone or in any combination of two or more thereof. Examples of the alloys include Ni-Si alloys, Ti-Si alloys, and other alloys each containing a transition metal element. Examples of the metal oxides include amorphous tin oxides such as $SnB_{0.4}P_{0.6}O_{3.1}$, tin silicon oxides such as $SnSiO_3$, silicon oxides such as SiO, and lithium titanates each having a spinel structure, such as $Li_{4+x}Ti_5O_{12}$. Examples of the metal sulfides include titanium sulfides such as $TiS_2$, molybdenum sulfides such as $MoS_2$, and iron sulfides such as FeS, $FeS_2$, and $Li_xFeS_2$. Of these active materials, hard carbon is preferred, and small-particle-size hard carbon having a particle size D50 of less than 8 $\mu$m is particularly preferred. The particle size D50 is a particle size obtained by measuring the volume distribution of the particles by the laser diffraction scattering method, and then calculating out a specific particle size such that the quantity of particles having this particle size or less, out of the entire particles, corresponds to 50% by volume of the entire particles (in the cumulative distribution).

Separators 21:

The separators 21 each have a substrate 30, and a heat-resistant layer 31 formed on one or each surface of two opposite surfaces of the substrate 30 and having higher heat resistance than the substrate 30. The substrate 30 may be, for example, a microporous polyolefin film, a woven fabric or nonwoven fabric made of a synthetic resin, a woven fabric or nonwoven fabric made of natural fiber, glass fiber or ceramic fiber, or a paper piece. The microporous polyolefin film may be a polyethylene or polypropylene film, or a composite film made of these polymers. The resin of the synthetic resin fiber can be selected from polyacrylonitrile (PAN), polyamide (PA), polyesters, polyethylene terephthalate (PET), and polyolefins such as polypropylene (PP) and polyethylene (PE); and mixtures of these resins. The thickness of the separators 21 is preferably from 5 to 35 $\mu$m.

The method for producing the substrate 30 may be a known method. An example of the method for producing the substrate 30 will be described below. The method for producing the substrate 30 is not limited to the method described below.

One or more polymers (such as polyethylene and/or polypropylene) are mixed with predetermined additives. The resultant polymer-based mixture is mixed with a substance to be extracted, such as liquid paraffin, and the resultant is heated to be melted. At this time, the polymer-based mixture may be mixed with the substance to be extracted in a batch manner, or may be continuously mixed with the substance to be extracted using an extruder. The resultant melt is discharged from a T die, and then casted onto a cooling roll the temperature of which is controlled to a predetermined temperature. In this way, a sheet is formed in which the polymer and liquid paraffin are phase-separated from each other. Thereafter, the sheet is set to a biaxial tenter drawing machine to be biaxially drawn at a predetermined draw ratio to form a film. About the biaxial drawing, drawings along the two axes may be simultaneously or successively performed. The film is introduced into a solvent tank filled with a good solvent for the substance to be extracted (for example, methyl ethyl ketone), so that the substance is extracted to be removed. Thereafter, the resultant is dried to remove the solvent used for the extraction. Furthermore, the film is introduced into a TD tenter heat fixing machine to be thermally fixed at a predetermined temperature. This process can yield the substrate 30.

The tensile elongation of the separators 21 can be appropriately adjusted by varying the production line speed when the substrate 30 is continuously produced, the draw ratio in the biaxial drawing, or the content of polypropylene. The breaking strength of the separators 21 can also be adjusted in the same manner. Another manner for changing the breaking strength of the separators 21 may be a manner of adjusting the thickness of the heat-resistant layer 31 and the content of heat-resistant particles in the layer 31, which will be detailed below.

The heat-resistant layer 31 formed on the substrate 30 contains heat-resistant particles and a binder. The heat-resistant layer 31 is preferably arranged to be opposite to the positive composite layer 23. The heat-resistant particles are preferably particles giving a weight reduction of 5% or less at 500°C in the atmosphere, and more desirably particles giving a weight reduction of 5% or less at 800°C in the atmosphere. The material of such particles is, for example, an inorganic compound. The inorganic compound may be one or more inorganic compound, or a mixture or composite of two or more thereof. Specific examples of the particles include oxide fine particles such as iron oxide, $SiO_2$, $Al_2O_3$, $TiO_2$, $BaTiO_2$, $ZrO$, and alumina-silica composite oxide; nitride fine particles such as aluminum nitride and silicon nitride; hardly-soluble ionic crystal fine particles such as calcium fluoride, barium fluoride and barium sulfate ionic crystal fine particles; covalent crystal fine particles such as silicon and diamond crystal fine particles; clay fine particles such as talc and montmorillonite fine particles; and compounds each originating from a mineral resource, such as boehmite, zeolite, apatite, kaolin, mullite, spinel, olivine, sericite, bentonite and mica, and artificial compounds equivalent to these natural compounds. The heat-resistant particles may be fine non-electroconductive particles obtained by applying a surface treatment with an electrically insulating material (for example, any one of the above-mentioned materials, which can each constitute the heat-resistant particles and have electrically insulating property) to surfaces of conductive fine particles such as metal fine particles, oxide fine particles such as $SnO_2$ or tin-indium oxide (ITO) particles, or carbonaceous fine particles such as carbon black or graphite particles. The above-mentioned inorganic compounds are in particular preferably $SiO_2$, $Al_2O_3$, or alumina-silica composite oxide.

The binder used in the heat-resistant layer 31 is not particularly limited about the kind thereof as far as the binder is a material stable against the electrolytic solution 26. Examples of the binder include polyacrylonitrile, polyvinylidene fluoride, a copolymer made from vinylidene fluoride and hexafluoropropylene, polytetrafluoroethylene, polyhexafluoropropylene, polyethylene oxide, polypropylene oxide, polyphosphazene, polysiloxane, polyvinyl acetate, polyvinyl alcohol, polymethyl acrylate, polymethyl methacrylate, polyacrylic acid, polymethacrylic acid, styrene-butadiene rubber, nitrile-butadiene rubber, polystyrene and polycarbonate. From the viewpoint of electrochemical stability, preferred are polyacrylonitrile, polyvinylidene fluoride, polyhexafluoropropylene, and polyethylene oxide. Particularly preferred are polyvinylidene fluoride, polyacrylic acid, polymethacrylic acid, and styrene-butadiene rubber.

The heat-resistant layer 31 may contain one or more known compounds such as a thickener and a surfactant. The composition of a coating agent for this layer may be varied by finely adjusting the respective proportions of the binder, the thickener and the surfactant, and the solid content in the coating agent. The outside surface of the heat-resistant layer may be subjected to modifying treatment. The material of the heat-resistant particles is not limited to any inorganic compound, and may be an organic compound.

By laying the heat-resistant layer 31 onto one or each of the separators 21, the separator 21 can be restrained from being shrunken by heat generated by a short circuit between the positive electrode 18 and the negative electrode 19. Even when the substrate 30 is melted by the generated heat, the enlargement of a short circuit current can be restrained since the heat-resistant layer 31 is formed between the positive electrode 18 and the negative electrode 19.

Electrolytic solution 26:

The electrolytic solution 26 may be a nonaqueous electrolytic solution, in which an electrolytic salt is dissolved in a nonaqueous solvent. Inside the case 11, the electrolytic solution 26 is impregnated into the positive composite layer 23, the negative composite layer 25, and the separators 21. A fraction of the electrolytic solution 26 which remains inside the case 11 without being impregnated into the positive composite layer 23, the negative composite layer 25, or the separators 21 is not illustrated. The electrolytic solution 26 is not limited, and may be an electrolytic solution the use of which is generally suggested for lithium ion batteries, and other batteries. Examples of the nonaqueous solvent include cyclic carbonates such as propylene carbonate, ethylene carbonate, butylene carbonate, chloroethylene carbonate and vinylene carbonate; cyclic esters such as $\gamma$-butyrolactone and $\gamma$-valerolactone; linear carbonates such as dimethyl carbonate, diethyl carbonate, and ethyl methyl carbonate; linear esters such as methyl formate, methyl acetate, and methyl butyrate; tetrahydrofuran or derivatives thereof; ethers such as 1,3-dioxane, 1,4-dioxane, 1,2-dimethoxyethane, 1,4-dibutoxyethane, and methyl diglyme; nitriles such as acetonitrile and benzonitrile; dioxolane and derivatives thereof; and ethylene sulfide, sulfolane and sultone, and derivatives thereof. These may be used alone or in the form of a mixture of two or more thereof. However, the nonaqueous solvent is not limited to these solvents. One or more known additives may be incorporated into the electrolytic solution 26.

Examples of the electrolytic salt include inorganic ion salts each having any one of lithium (Li), sodium (Na), and potassium (K), such as $LiClO_4$, $LiBF_4$, $LiAsF_6$, $LiPF_6$, LiSCN, LiBr, LiI, $Li_2SO_4$, $Li_2B_{10}Cl_{10}$, $NaClO_4$, NaI, NaSCN, NaBr, $KClO_4$, and KSCN; and organic ion salts such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4N$-maleate, $(C_2H_5)_4N$-benzoate, $(C_2H_5)_4N$-phtalate, lithium stearylsulfonate, lithium octylsulfonate, and lithium dodecylbenzenesulfonate. These ionic compounds may be used alone or in the form of a mixture of two or more thereof.

Using a mixture obtained by mixing $LiBF_4$ with a lithium salt having a perfluoroalkyl group such as $LiN(C_2F_5SO_2)_2$, the electrolyte can be lowered in viscosity so that the energy storage device can be further improved in low-temperature performance and can also be restrained from undergoing self-discharge. Thus, this manner is more preferred.

The electrolytic solution 26 may be a molten salt in ambient temperature or an ionic liquid.

Examples

Hereinafter, the present invention will be described in detail by way of experiment examples. The invention is never limited by these experiment examples.

In each of Experiment Examples 1 to 28, each energy storage device 10 was produced by holding an energy storage element 20 into a case body 14 having an opening at its upper, connecting a positive electrode 18 and a positive electrode terminal 16 to each other, connecting a negative electrode 19 and a negative electrode terminal 17 to each other, injecting an electrolytic solution 26 thereinto, and then welding the case body 14 and a lid 15 with each other.

<Experiment Example 1>

The positive electrode was formed as follows. First, 90 parts by mass of a lithium composite oxide represented by the composition formula $LiNiMnCoO_2$ as a positive active material was mixed with 5 parts by mass of polyvinylidene fluoride as a binder and 5 parts by mass of acetylene black as a conductive additive to prepare a positive composite. This positive composite was applied to each of the two surfaces of a positive electrode substrate made of an aluminum foil piece having a thickness of 15 $\mu$m. The resultant was dried, and then pressed through a roll press machine to form the positive electrode.

The negative electrode was formed as follows. First, 95 parts by mass of hard carbon as a negative active material was mixed with 5 parts by mass of polyvinylidene fluoride as a binder. Thereto was appropriately added N-methypyrrolidone, and the mixture was made into a paste form to prepare a negative composite. This negative composite was applied to each of the two surfaces of a negative electrode substrate made of a copper foil piece having a thickness of 10 $\mu$m. The resultant was dried, and then pressed through a roll press machine to form the negative electrode.

The two separators were each formed as follows. As a substrate, a microporous polyolefin film was used which had an air permeability of 130 sec/100cm$^3$ and a thickness of 15 $\mu$m. A coating agent was prepared by mixing alumina, an acrylic latex, a thickener and a surfactant with each other. This coating agent was applied to a surface of the substrate by gravure coating. After the application, the workpiece was dried at 80°C for 12 hours to form the separator having a heat-resistant layer having a thickness of 7.5 $\mu$m.

One of the separators, the negative electrode, and the other separator were successively superimposed onto the positive electrode thus obtained, and the resultant was spirally wound to produce the energy storage element, which was of a wound type.

The used electrolytic solution was a mixed solvent containing $LiPF_6$ as a solute and propylene carbonate, dimethyl carbonate and ethyl methyl carbonate as solvents. The mixed solvent was prepared to set the ratio by volume of propylene carbonate/dimethyl carbonate/ethyl methyl carbonate to 3/2/5. $LiPF_6$ was dissolved in this mixed solvent to adjust the concentration of $LiPF_6$ to 1 mol/L.

The above-mentioned constituting elements were used to produce the energy storage devices according to Experiment Example 1.

<Experiment Examples 2 to 8>

Each energy storage device according to each of Experiment Examples 2 to 8 was produced in the same way as in Experiment Example 1 except the use of each separator using a substrate having a tensile elongation and a breaking strength different from those of each of the separators used in Experiment Example 1.

<Taking-Off of Positive Electrode and Separators from Each Energy Storage Device>

Each of the energy storage devices was disassembled under the discharged state (2 V), and the positive electrode and the separators were taken off therefrom and then washed sufficiently with dimethyl carbonate. Thereafter, the positive electrode and the separators were vacuum-dried at 25°C.

<Separation of Positive Electrode Substrate (Peeling of Positive Composite)>

The positive electrode was immersed in an organic solvent in which the binder can be dissolved, and this system was allowed to stand still at 65°C for 2 days. The used organic solvent was N-methylpyrrolidone. During the standing-still, the positive composite layer was peeled off from the positive electrode substrate. The positive electrode substrate was taken off from the organic solvent, washed with N-methylpyrrolidone, and then vacuum-dried at 25°C.

<Separator Thickness, Substrate Thickness, and Heat-resistant Layer Thickness>

About any one of the separators taken off from the energy storage device as described above, a cross section thereof was subjected to CP (cross section polishing) working, and the cross section was observed through a SEM. About the single separator, measurements were made at five positions thereof about the separator thickness, the substrate thickness, and the heat-resistant layer thickness. The respective averages of the three measured values were defined as the separator thickness, the substrate thickness, and the heat-resistant layer thickness.

The value of the ratio of the heat-resistant layer thickness measured as described above to the substrate thickness measured in the same way was defined as the ratio between the heat-resistant layer thickness and the substrate thickness. In each of the examples, the ratio between the heat-resistant layer thickness and the substrate thickness was set to 0.5.

The value of the ratio of the heat-resistant layer thickness to the positive electrode substrate thickness in each of the examples, measured as described above, is shown as the ratio between the heat-resistant layer thickness and the positive electrode substrate thickness in Table 1.

<Proportion of Heat-Resistant Particles>

Any one of the separators taken off as described above from one of the energy storage devices was cut into a size of 4 cm x 4 cm. The mass W1 of the cut piece was measured. Thereafter, the piece was immersed in a mixed solvent composed of water and ethanol (ratio by volume = 1/1), and an ultrasonic washing machine was used to peel off the heat-resistant layer. The mass W2 of the separator, from which the heat-resistant layer had been peeled off in this way, was measured.

A sample which was different from the sample about which the masses W1 and W2 were measured was obtained by cutting, into a size of 4 cm x 4 cm, any one of the separators taken off from one of the energy storage devices. A thermogravimetric (TG) device was used to raise the temperature of the sample to 800°C at a heating rate of 10°C/min and then measure the weight W3 thereof at the time when the maintenance of the temperature of 800°C for 30 minutes was completed. In accordance with an equation described below, the thus measured values were used to calculate out the proportion R (%) of the mass of the heat-resistant particles contained in the heat-resistant layer to the mass of the heat-resistant layer. The thus calculated proportion R is shown in the column "Heat-resistant particle proportion" in Table 1.

$$R = \{(W3/(W1 - W2)\} \times 100$$

<Separator Tensile Test>

Any one of the separators taken off as described above from one of the energy storage devices was cut into a test piece having a size of 2 cm x 10 cm to render the first direction in the state where the separator was held in the case the longitudinal direction of the piece. About this test piece, a tensile test was made in accordance with JIS K 7161-1994. In this way, the tensile fracture strength and the tensile elongation were measured.

Furthermore, any one of the separators taken off from one of the energy storage devices was cut into a test piece having a size of 2 cm x 10 cm to render the second direction in the state where the separator was held in the case the longitudinal direction of the piece. About this test piece, a tensile test was made in accordance with JIS K 7161-1994. In this way, the tensile fracture strength and the tensile elongation were measured.

<Positive Electrode Substrate Tensile Test>

The positive electrode substrate taken off as described above from one of the energy storage devices was cut into a test piece having a size of 2 cm x 10 cm to render the first direction in the state where the positive electrode substrate was held in the case the longitudinal direction of the piece. About this test piece, a tensile test was made in accordance with JIS Z 2241-2011. In this way, the tensile fracture strength and the tensile elongation were measured.

The positive electrode substrate taken off from one of the energy storage devices was cut into a test piece having a size of 2 cm x 10 cm to render the second direction in the state where the positive electrode substrate was held in the case the longitudinal direction of the piece. About this test piece, a tensile test was made in accordance with JIS Z 2241-2011. In this way, the tensile fracture strength and the tensile elongation were measured.

<First Direction Elongation Ratio>

A calculation was made about the ratio of the tensile elongation in the first direction of the separator to the tensile elongation in the first direction of the positive electrode substrate. The resultant value was defined as the first direction elongation ratio. The results are shown in Table 1.

<Second Direction Elongation Ratio>

A calculation was made about the ratio of the tensile elongation in the second direction of the separator to the tensile elongation in the second direction of the positive electrode substrate. The resultant value was defined as the second direction elongation ratio. The results are shown in Table 1.

<First Direction Strength Ratio>

A calculation was made about the value of the ratio of the product of the tensile fracture strength in the first direction of the separator and the thickness of the separator to the product of the tensile fracture strength in the first direction of the positive electrode substrate and the thickness of the positive electrode substrate. The resultant value was defined as the first direction strength ratio. The results are shown in Table 1.

<Second Direction Strength Ratio>

A calculation was made about the value of the ratio of the product of the tensile fracture strength in the second direction of the separator and the thickness of the separator to the product of the tensile fracture strength in the second direction of the positive electrode substrate and the thickness of the positive electrode substrate. The resultant value was defined as the second direction strength ratio. The results are shown in Table 1.

<Round Bar Crush Test in First Direction>

1C (A) was determined on the basis of a capacity obtained by discharging one of the energy storage devices at 25°C and 4A, using a voltage having an upper limit value of 4.1 V and a lower limit value of 2.4 V. Just before a round bar crush test, the energy storage device was charged from the discharged state at 25°C and 0.5C (A) for 1.6 hours. In this way, an energy storage device was prepared to have an SOC (state of charge) of 80%. As illustrated in Fig. 4, a round bar 34 made of steel and having a diameter of 16 mm was pushed downward onto one of the long side faces of this energy storage device to crush the energy storage device. The round bar 34 was pushed against the energy storage device at a central position in the second direction of the long side face in the state where the round bar 34 was kept in a posture to direct the long axis direction thereof along the first direction. The length of the round bar 34 was made longer than that of the length in the first direction of the case. The depth in the energy storage device over which the round bar 34 was pushed against the energy storage device was a depth adjusted to decrease the thickness of the case down to 2/3 of the original length in a direction orthogonal to the long sides of the energy storage device. Thereafter, a change in the temperature of the energy storage device was measured. Table 1 shows the ratio of the highest temperature of the energy storage device relative to the highest temperature of Experiment Example 3, which was regarded as 100. This ratio is shown as the "relative-to-Experiment Example-3 highest temperature value in the first direction crushing."

<Round Bar Crush Test in Second Direction>

1C (A) was determined on the basis of a capacity obtained by discharging one of the energy storage devices at 25°C and 4A, using a voltage having an upper limit value of 4.1 V and a lower limit value of 2.4 V. Just before a round bar crush test, the energy storage device was charged from the discharged state at 25°C and 0.5C (A) for 1.6 hours. In this way, an energy storage device was prepared to have an SOC (state of charge) of 80%. As illustrated in Fig. 5, a round bar 34 made of steel and having a diameter of 16 mm was pushed downward onto one of the long side faces of this energy storage device to crush the energy storage device. The round bar 34 was pushed against the energy storage device at a central position in the first direction of the long side face in the state where the round bar 34 was kept in a posture to direct the long axis direction thereof along the second direction. The length of the round bar 34 was made longer than that of the length in the second direction of the case. The depth in the energy storage device over which the round bar 34 was pushed against the energy storage device was a depth adjusted to decrease the thickness of the case down to 2/3 of the original length in a direction orthogonal to the long sides of the energy storage device. Thereafter, a change in the temperature of the energy storage device was measured. Table 1 shows the ratio of the highest temperature of the energy storage device relative to the highest temperature of Experiment Example 3, which was regarded as 100. This ratio is shown as the "relative-to-Experiment Example-3 highest temperature value in the second direction crushing."

[Table 1]

| | First direction elongation ratio | Second direction elongation ratio | First direction strength ratio | Second direction strength ratio | Ratio between heat-resistant layer thickness and positive electrode substrate thickness | Heat-resistant particle proportion (%) | Negative electrode binder | Relative-to-Experiment Example-3 highest temperature value in first direction crushing | Relative-to-Experiment Example-3 highest temperature value in second direction crushing |
|---|---|---|---|---|---|---|---|---|---|
| Experiment Example 1 | 3 | 15 | 1.28 | 0.80 | 0.50 | 95 | PVDF | 245 | 110 |
| Experiment Example 2 | 4 | 15 | 1.12 | 0.80 | 0.50 | 95 | PVDF | 114 | 97 |
| Experiment Example 3 | 15 | 15 | 0.80 | 0.80 | 0.50 | 95 | PVDF | 100 | 100 |
| Experiment Example 4 | 35 | 15 | 0.64 | 0.80 | 0.50 | 95 | PVDF | 95 | 99 |
| Experiment Example 5 | 48 | 15 | 0.40 | 0.80 | 0.50 | 95 | PVDF | 90 | 102 |
| Experiment Example 6 | 60 | 15 | 0.24 | 0.80 | 0.50 | 95 | PVDF | 108 | 102 |
| Experiment Example 7 | 68 | 15 | 0.18 | 0.80 | 0.50 | 95 | PVDF | 118 | 103 |
| Experiment Example 8 | 70 | 15 | 0.16 | 0.80 | 0.50 | 95 | PVDF | 185 | 103 |

In Table 1, Experiment Examples 2 to 7 are working examples of the invention while Experiment Examples 1 and 8 are comparative examples.

First Direction Elongation Ratio:

In Experiment Examples 2 to 7, in each of which the first direction elongation ratio (the value of the ratio of the tensile elongation in the first direction of the separator to the tensile elongation in the first direction of the positive electrode substrate) is from 4 to 68, the relative-to-Experiment Example-3 highest temperature value thereof in the first direction crushing was from 90 to 114. This would be because the energy storage device has such a structure that when the device is crushed, the positive electrode substrate is fractured earlier than the separators. By this matter, inside the energy storage device, the positive electrode is cut into plural pieces in the state where the shape of the separators is kept. As a result, a direct contact between the positive and negative electrodes can be restrained. This matter would make it possible to restrain a short circuit current from flowing between the positive and negative electrodes.

Even if any one of the separators is fractured so that the positive and negative electrodes directly contact each other, the area of a contact region where the two electrodes directly contact each other to cause a short circuit can be decreased since the positive electrode turns into the state of being cut into plural pieces earlier than the separators. This matter would make it possible to restrain such a short circuit current even when the energy storage device is crushed.

By contrast, in Experiment Example 1, in which the first direction elongation ratio is 3, the relative-to-Experiment Example-3 highest temperature value thereof in the first direction crushing was 245. This would be because any one of the separators was fractured earlier than the positive electrode substrate and a short circuit was caused between the positive and negative electrodes so that a relatively large short circuit current flowed.

In Experiment Example 8, in which the first direction elongation ratio is 70, the relative-to-Experiment Example-3 highest temperature value thereof in the first direction crushing was 185. This would be because after the fracture of any one of the separators, the separators were shrunken by heat generated from the energy storage device so that the positive and negative electrodes directly contacted each other to increase the short-circuit area.

The first direction elongation ratio is preferably from 4 to 68, more preferably from 15 to 48, in particular preferably 35.

First Direction Strength Ratio:

In Experiment Examples 2 to 5, in each of which the first direction strength ratio (the value of the ratio of the product of the tensile fracture strength in the first direction of the separator and the thickness of the separator to the product of the tensile fracture strength in the first direction of the positive electrode substrate and the thickness of the positive electrode substrate) is from 0.40 to 1.12, the relative-to-Experiment Example-3 highest temperature value thereof in the first direction crushing was from 90 to 114.

The matter that the first direction strength ratio is from 0.40 to 1.12 means that when the energy storage device is crushed, the positive electrode substrate is fractured by a smaller force than the separators. Thus, when the energy storage device is crushed, the positive electrode substrate is fractured earlier than the separators so that a direct contact between the positive and negative electrodes can be restrained. This matter would make it possible to restrain a short circuit current from flowing between the positive and negative electrodes.

By contrast, in Experiment Example 8, in which the first direction strength ratio is 0.16, the relative-to-Experiment Example-3 highest temperature value thereof in the first direction crushing was 185. This would be because after the fracture of any one of the separators, the separators were shrunken by heat generated from the energy storage device so that the positive and negative electrodes directly contacted each other to increase the short-circuit area.

In Experiment Example 1, in which the first direction strength ratio is 1.28, the relative-to-Experiment Example-3 highest temperature value thereof in the first direction crushing was 245. This would be because any one of the separators was fractured earlier than the positive electrode substrate and a short circuit was caused between the positive and negative electrodes so that a relatively large short circuit current flowed.

<Experiment Examples 9 to 15>

Each energy storage device according to each of Experiment Examples 9 to 15 was produced in the same way as in Experiment Example 1 except the use of each separator using a substrate having a tensile elongation and a breaking strength different from those of each of the separators used in Experiment Example 1. Next, about the energy storage devices according to each of Experiment Examples 9 to 15, the same measurements and tests as those made about Experiment Examples 1 to 8 were made. The results are shown, together with the results of Experiment Example 3, in Table 2.

[Table 2]

| | First direction elongation ratio | Second direction elongation ratio | First direction strength ratio | Second direction strength ratio | Ratio between heat-resistant layer thickness and positive electrode substrate thickness | Heat-resistant particle proportion (%) | Negative electrode binder | Relative-to-Experiment Example-3 highest temperature value in first direction crushing | Relative-to-Experiment Example-3 highest temperature value in second direction crushing |
|---|---|---|---|---|---|---|---|---|---|
| Experiment Example 9 | 15 | 3 | 0.80 | 1.28 | 0.50 | 95 | PVDF | 110 | 200 |
| Experiment Example 10 | 15 | 4 | 0.80 | 1.12 | 0.50 | 95 | PVDF | 102 | 110 |
| Experiment Example 3 | 15 | 15 | 0.80 | 0.80 | 0.50 | 95 | PVDF | 100 | 100 |
| Experiment Example 11 | 15 | 35 | 0.80 | 0.64 | 0.50 | 95 | PVDF | 101 | 95 |
| Experiment Example 12 | 15 | 48 | 0.80 | 0.40 | 0.50 | 95 | PVDF | 102 | 93 |
| Experiment Example 13 | 15 | 60 | 0.80 | 0.24 | 0.50 | 95 | PVDF | 101 | 111 |
| Experiment Example 14 | 15 | 68 | 0.80 | 0.18 | 0.50 | 95 | PVDF | 102 | 121 |
| Experiment Example 15 | 15 | 70 | 0.80 | 0.16 | 0.50 | 95 | PVDF | 104 | 161 |

About Table 2, Experiment Examples 3, and 10 to 14 were working examples of the invention, and Experiment Examples 9 and 15 were comparative examples.

Second Direction Elongation Ratio:

In Experiment Examples 3, and 10 to 14, in each of which the second direction elongation ratio (the value of the ratio of the tensile elongation in the second direction of the separator to the tensile elongation in the second direction of the positive electrode substrate) is from 4 to 68, the relative-to-Experiment Example-3 highest temperature value thereof in the second direction crushing was from 93 to 111. This would be because the energy storage device has such a structure that when the device is crushed, the positive electrode substrate is fractured earlier than the separators. By this matter, inside the energy storage device, the positive electrode is cut into plural pieces in the state where the shape of the separators is kept. As a result, a direct contact between the positive and negative electrodes can be restrained. This matter would make it possible to restrain a short circuit current from flowing between the positive and negative electrodes.

Even if any one of the separators is fractured so that the positive and negative electrodes directly contact each other, the area of a contact region where the two electrodes directly contact each other to cause a short circuit can be decreased since the positive electrode turns into the state of being cut into plural pieces earlier than the separators. This matter would make it possible to restrain such a short circuit current even when the energy storage device is crushed.

By contrast, in Experiment Example 9, in which the second direction elongation ratio is 3, the relative-to-Experiment Example-3 highest temperature value thereof in the second direction crushing was 200. This would be because any one of the separators was fractured earlier than the positive electrode substrate and a short circuit was caused between the positive and negative electrodes so that a relatively large short circuit current flowed.

In Experiment Example 15, in which the second direction elongation ratio is 70, the relative-to-Experiment Example-3 highest temperature value thereof in the second direction crushing was 161. This would be because after the fracture of any one of the separators, the separators were shrunken by heat generated from the energy storage device so that the positive and negative electrodes directly contacted each other to increase the short-circuit area.

The second direction elongation ratio is preferably from 4 to 68, more preferably from 15 to 48, in particular preferably 35.

Second Direction Strength Ratio:

In Experiment Examples 3, and 10 to 12, in each of which the second direction strength ratio (the value of the ratio of the product of the tensile fracture strength in the second direction of the separator and the thickness of the separator to the product of the tensile fracture strength in the second direction of the positive electrode substrate and the thickness of the positive electrode substrate) is from 0.40 to 1.12, the relative-to-Experiment Example-3 highest temperature value thereof in the second direction crushing was from 93 to 110.

The matter that the second direction strength ratio is from 0.40 to 1.12 means that when the energy storage device is crushed, the positive electrode substrate is fractured by a smaller force than the separators. Thus, when the energy storage device is crushed, the positive electrode substrate is fractured earlier than the separators so that a direct contact between the positive and negative electrodes can be restrained. This matter would make it possible to restrain a short circuit current from flowing between the positive and negative electrodes.

By contrast, in Experiment Example 15, in which the second direction strength ratio is 0.16, the relative-to-Experiment Example-3 highest temperature value thereof in the second direction crushing was 161. This would be because after the fracture of any one of the separators, the separators were shrunken by heat generated from the energy storage device so that the positive and negative electrodes directly contacted each other to increase the short-circuit area.

In Experiment Example 9, in which the second direction strength ratio is 1.28, the relative-to-Experiment Example-3 highest temperature value thereof in the second direction crushing was 200. This would be because any one of the separators was fractured earlier than the positive electrode substrate and a short circuit was caused between the positive and negative electrodes so that a relatively large short circuit current flowed.

<Experiment Examples 16 to 21>

Each energy storage device according to each of Experiment Examples 16 to 21 was produced in the same way as in Experiment Example 1 except the use of a positive electrode substrate having a thickness different from that of the positive electrode substrate used in Experiment Example 1. Next, about the energy storage devices according to each of Experiment Examples 16 to 21, the same measurements and tests as those made about Experiment Examples 1 to 8 were made. The results are shown, together with the results of Experiment Example 3, in Table 3.

[Table 3]

| | First direction elongation ratio | Second direction elongation ratio | First direction strength ratio | Second direction strength ratio | Ratio between heat-resistant layer thickness and positive electrode substrate thickness | Heat-resistant particle proportion (%) | Negative electrode binder | Relative-to-Experiment Example-3 highest temperature value in first direction crushing | Relative-to-Experiment Example-3 highest temperature value in second direction crushing |
|---|---|---|---|---|---|---|---|---|---|
| Experiment Example 16 | 15 | 15 | 0.32 | 0.32 | 0.20 | 95 | PVDF | 250 | 285 |
| Experiment Example 17 | 15 | 15 | 0.40 | 0.40 | 0.25 | 95 | PVDF | 127 | 132 |
| Experiment Example 18 | 15 | 15 | 0.48 | 0.48 | 0.30 | 95 | PVDF | 110 | 115 |
| Experiment Example 19 | 15 | 15 | 0.64 | 0.64 | 0.40 | 95 | PVDF | 102 | 104 |
| Experiment Example 3 | 15 | 15 | 0.80 | 0.80 | 0.50 | 95 | PVDF | 100 | 100 |
| Experiment Example 20 | 15 | 15 | 0.96 | 0.96 | 0.60 | 95 | PVDF | 100 | 103 |
| Experiment Example 21 | 15 | 15 | 1.12 | 1.12 | 0.70 | 95 | PVDF | 99 | 101 |

About Table 3, Experiment Examples 3, and 17 to 21 were working examples of the invention, and Experiment Example 16 was a comparative example.

Ratio between Heat-Resistant Layer Thickness and Positive Electrode Substrate Thickness:

In Experiment Examples 3, and 17 to 21, in each of which the ratio between the heat-resistant layer thickness and the positive electrode substrate thickness (the ratio of the heat-resistant layer thickness to the positive electrode substrate thickness) is from 0.25 to 0.70, the relative-to-Experiment Example-3 highest temperature value thereof in the first direction crushing was from 99 to 127. This would be because the separators were restrained from being thermally shrunken by the heat-resistant layer so that when a short circuit was caused between the positive and negative electrodes, the separators were not easily thermally shrunken, so as to restrain an increase in the contact area between the positive and negative electrodes.

By contrast, in Experiment Example 16, in which the ratio between the heat-resistant layer thickness and the positive electrode substrate thickness is 0.20, the relative-to-Experiment Example-3 highest temperature value thereof in the first direction crushing was 250, and the relative-to-Experiment Example-3 highest temperature value thereof in the second direction crushing was 285. This would be because the heat-resistant layer was thinner than the positive electrode substrate and thus the thermal shrinkage of the separators was not sufficiently restrained so that the contact area between the positive and negative electrodes could not be decreased when any one of the separators was fractured.

Unpreferable is a case in which the ratio between the heat-resistant layer thickness and the positive electrode substrate thickness is larger than 0.70 since the positive electrode substrate is easily fractured or the positive electrode substrate is easily wrinkled when the positive composite layer is applied onto the positive electrode substrate.

The ratio between the heat-resistant layer thickness and the positive electrode substrate thickness is preferably from 0.30 to 0.60, more preferably from 0.40 to 0.60.

First Direction Strength Ratio:

In Experiment Examples 3, and 17 to 21, in each of which the first direction strength ratio is from 0.40 to 1.12, the relative-to-Experiment Example-3 highest temperature value thereof in the first direction crushing was from 99 to 127.

The first direction strength ratio is preferably from 0.40 to 1.12, more preferably from 0.48 to 0.96, in particular preferably from 0.64 to 0.80.

Second Direction Strength Ratio:

In Experiment Examples 3, and 17 to 21, in each of which the second direction strength ratio is from 0.40 to 1.12, the relative-to-Experiment Example-3 highest temperature value thereof in the second direction crushing was from 100 to 132.

The second direction strength ratio is preferably from 0.40 to 1.12, more preferably from 0.48 to 0.96, in particular preferably from 0.64 to 0.80.

<Experiment Examples 22 to 27>

Each energy storage device according to each of Experiment Examples 22 to 27 was produced in the same way as in Experiment Example 1 except that the proportion of the heat-resistant particles contained in the heat-resistant layer was changed. Next, about the energy storage devices according to each of Experiment Examples 22 to 27, the same measurements and tests as those made about Experiment Examples 1 to 8 were made. The results are shown, together with the results of Experiment Example 3, in Table 4.

[Table 4]

| | First direction elongation ratio | Second direction elongation ratio | First direction strength ratio | Second direction strength ratio | Ratio between heat-resistant layer thickness and positive electrode substrate thickness | Heat-resistant particle proportion (%) | Negative electrode binder | Relative-to-Experiment Example-3 highest temperature value in first direction crushing | Relative-to-Experiment Example-3 highest temperature value in second direction crushing |
|---|---|---|---|---|---|---|---|---|---|
| Experiment Example 22 | 15 | 15 | 0.80 | 0.80 | 0.50 | 25 | PVDF | 245 | 235 |
| Experiment Example 23 | 15 | 15 | 0.80 | 0.80 | 0.50 | 30 | PVDF | 121 | 124 |
| Experiment Example 24 | 15 | 15 | 0.80 | 0.80 | 0.50 | 50 | PVDF | 118 | 117 |
| Experiment Example 25 | 15 | 15 | 0.80 | 0.80 | 0.50 | 81 | PVDF | 114 | 110 |
| Experiment Example 3 | 15 | 15 | 0.80 | 0.80 | 0.50 | 95 | PVDF | 100 | 100 |
| Experiment Example 26 | 15 | 15 | 0.80 | 0.80 | 0.50 | 97 | PVDF | 100 | 98 |
| Experiment Example 27 | 15 | 15 | 0.80 | 0.80 | 0.50 | 99 | PVDF | 130 | 155 |

About Table 4, Experiment Examples 3, and 23 to 27 were working examples of the invention, and Experiment Example 22 was a comparative example.

Heat-Resistant Particle Proportion:

In Experiment Examples 3, and 23 to 27, in each of which the heat-resistant particle proportion (proportion of mass of the heat-resistant particles in the heat-resistant layer) is from 30 to 99% of the mass of the heat-resistant layer, the relative-to-Experiment Example-3 highest temperature value thereof in the first direction crushing was from 100 to 130, and the relative-to-Experiment Example-3 highest temperature value thereof in the second direction crushing was from 98 to 155. This would be because the separators were not easily fractured by the reinforcement of the heat-resistant particles contained in the heat-resistant layer, so that a short circuit was restrained between the positive and negative electrodes.

By contrast, in Experiment Example 22, in which the heat-resistant particle proportion is 25%, the relative-to-Experiment Example-3 highest temperature value thereof in the first direction crushing was 245, and the relative-to-Experiment Example-3 highest temperature value thereof in the second direction crushing was 235. This would be because the percentage of the heat-resistant particles contained in the heat-resistant layer was relatively small and thus thermal shrinkage of the separators was not sufficiently restrained. Therefore, the contact area between the positive and negative electrodes could not be deceased when any one of the separators was fractured.

In Experiment Example 27, in which the heat-resistant particle proportion is 99%, the relative-to-Experiment Example-3 highest temperature value thereof in the first direction crushing was 130, and the relative-to-Experiment Example-3 highest temperature value thereof in the second direction crushing was 155. In the present Experiment Example 27, 99% of the mass of the heat-resistant layer is the mass of the heat-resistant particles. Thus, the proportion of the mass of the binder is relatively small, and thus when the energy storage device was crushed, the heat-resistant layer partially fell out from the substrate so that regions where the heat-resistant layer was not present came to be generated. As a result, thermal shrinkage of the separators could not be sufficiently restrained. Thus, when any one of the separators was fractured, the contact area between the positive and negative electrodes could not be decreased. This matter would have produced the present results.

The heat-resistant particle proportion is preferably from 30 to 99%, more preferably from 50 to 97%, in particular preferably from 81 to 95%.

<Experiment Example 28>

The negative active material used in Experiment Example 28 was 97 parts by mass of hard carbon, and the negative electrode binder used therein was a mixture of 2 parts by mass of styrene-butadiene rubber (SBR) and 1 part by mass of CMC (carboxymethylcellulose). Thereto was appropriately added distilled water to make the composition into a paste form. In this way, a negative composite was prepared. Each energy storage device according to Experiment Example 28 was produced in the same way as in Experiment Example 1 except the above. Next, about the energy storage devices according to Experiment Example 28, the same measurements and tests as those made about Experiment Examples 1 to 8 were made. The results are shown, together with the results of Experiment Example 3, in Table 5.

[Table 5]

| | First direction elongation ratio | Second direction elongation ratio | First direction strength ratio | Second direction strength ratio | Ratio between heat-resistant layer thickness and positive electrode substrate thickness | Heat-resistant particle proportion (%) | Negative electrode binder | Relative-to-Experiment Example-3 highest temperature value in first direction crushing | Relative-to-Experiment Example-3 highest temperature value in second direction crushing |
|---|---|---|---|---|---|---|---|---|---|
| Experiment Example 3 | 15 | 15 | 0.80 | 0.80 | 0.50 | 95 | PVDF | 100 | 100 |
| Experiment Example 28 | 15 | 15 | 0.80 | 0.80 | 0.50 | 95 | SBR-CMC | 90 | 92 |

About Table 5, Experiment Examples 3 and 28 were working examples of the invention.

In the energy storage devices according to Experiment Example 28, in which the negative composite layer contained styrene-butadiene rubber, the relative-to-Experiment Example-3 highest temperature value thereof in the first direction crushing was 90, and the relative-to-Experiment Example-3 highest temperature value thereof in the second direction crushing was 92. This would be because when the energy storage devices each rose in temperature, a decomposition reaction generated at the negative electrode of the device was restrained so that heat generated by the decomposition reaction was restrained.

As described above, according to the technique disclosed in the present specification, the energy storage device can be restrained from rising in temperature when crushed.

<Other Embodiments>

The present invention is not limited to the embodiment described above with reference to the drawings, and thus, for example, embodiments as described below are included in the technical scope of the invention.

(1) The above-mentioned embodiment makes use of an electrolytic solution in which a nonaqueous electrolyte is dissolved in a solvent. However, an electrolytic solution usable in other embodiments may be a gelatinized electrolytic solution, or an electrolytic solution impregnated into a polymeric compound. Any nonaqueous electrolyte can be selected as required.

(2) The energy storage element 20 according to the above-mentioned embodiment is a winding type energy storage element, which is obtained by putting, on the positive electrode 18, the separator 21, the negative electrode 19, and the other separator 21 in this order, and then winding up the laminate. However, the energy storage element 20 is not limited to this form, and may be a stack type energy storage element obtained by repeatedly stacking the positive electrode 18, the separator 21, the negative electrode 19, and the separator 21 in this order.

(3) The above-mentioned embodiment has a structure in which the positive composite layer 23 is formed on each of the two surfaces of the positive electrode substrate 22. However, the positive composite layer 23 may be formed on any one of the surfaces of the positive electrode substrate 22.

(4) The above-mentioned embodiment has a structure in which the negative composite layer 25 is formed on each of the two surfaces of the negative electrode substrate 24. However, the negative composite layer 25 may be formed on any one of the surfaces of the negative electrode substrate 24.

(5) The above-mentioned embodiment has a structure in which the heat-resistant layer 31 is formed on the surface of the substrate 30 on which the positive electrode 18 is arranged. However, the invention is not limited to this form. Thus, the heat-resistant layer 31 may be formed on the surface of the substrate 30 on which the negative electrode 19 is arranged, or may be formed on each of the surfaces of the substrate 30.

(6) In the above-mentioned embodiment, the long side faces 12 are substantially rectangular. However, the long side faces 12 are not limited to this shape. The long side faces 12 may be changed into a square shape.

(7) The energy storage device 10 according to the above-mentioned embodiment has a structure in which the positive electrode terminal 16 and the negative electrode terminal 17 are projected from the upper surface of the case 11. However, the structure of the device is not limited to this structure. The positive electrode terminal 16 and the negative electrode terminal 17 may be projected from the upper and lower surfaces of the case 11, respectively.

(8) The content of the styrene-butadiene rubber is not limited to the value shown in Experiment Example 32. The content may be appropriately set, as required. For example, the content of styrene-butadiene rubber is 0 to 3 parts by mass relative to 97 parts by mass of the negative active material. Incidentally, CMC may not be contained.

According to the technique disclosed in the specification, the energy storage device can be restrained from rising in temperature when the device is used in an abnormal and unpredictable way and crushed.

**Claims**

1. An energy storage device (10) comprising:

a positive electrode (18) in which a positive composite layer (23) containing a positive composite is formed on a positive electrode substrate (22);

a negative electrode (19) in which a negative composite layer (25) containing a negative composite is formed on a negative electrode substrate (24);

a separator (21) interposed between the positive (18) and negative electrodes (19), the separator (21) comprising a substrate (30) and a heat-resistant layer (31) containing heat-resistant particles and formed on the substrate (30); and

a case (11) which holds therein the positive electrode (18), the negative electrode (19), and the separator (21), and is in the form of a substantially rectangular parallelepiped to have a pair of long side faces and a pair of short side faces,

**characterized in that** when a direction along a first edge of the long side face, the first edge partially constituting the entire circumferential edge of the long side face, is defined as a first direction, and a direction along a second edge of the long side face, the second edge being orthogonal to the first edge, is defined as a second direction, a value of a ratio of a tensile elongation in the first direction of the separator (21) to a tensile elongation in the first direction of the positive electrode substrate (22) is from 4 to 68 in a state where the positive electrode (18) and the separator (21) are held in the case (11),

a value of a ratio of a tensile elongation in the second direction of the separator (21) to a tensile elongation in the second direction of the positive electrode substrate (22) is from 4 to 68 in the state where the positive electrode (18) and the separator (21) are held in the case (11),

a value of a ratio of a thickness of the heat-resistant layer (31) to a thickness of the positive electrode substrate (22) is from 0.25 to 0.70, and

a proportion by mass of the heat-resistant particles contained in the heat-resistant layer (31) is from 30 to 99% by mass of the heat-resistant layer (31).

2. The energy storage device (10) according to claim 1,

wherein a value of a ratio of a product of a tensile fracture strength in the first direction of the separator (21) and a thickness of the separator (21) to a product of a tensile fracture strength in the first direction of the positive electrode substrate (22) and the thickness of the positive electrode substrate (22) is from 0.40 to 1.12 in the state where the positive electrode (18) and the separator (21) are held in the case (11), and

a value of a ratio of a product of a tensile fracture strength in the second direction of the separator (21) and the thickness of the separator (21) to a product of a tensile fracture strength in the second direction of the positive electrode substrate (22) and the thickness of the positive electrode substrate (22) is from 0.40 to 1.12 in the state where the positive electrode (18) and the separator (21) are held in the case (11).

3. The energy storage device (10) according to claim 1 or 2, wherein the negative composite layer (25) comprises styrene-butadiene rubber (SBR).

4. The energy storage device (10) according to any one of claims 1 to 3, wherein the heat-resistant particles show a weight reduction of 5% or less at 500°C in the atmosphere.

5. The energy storage device (10) according to any one of claims 1 to 4, wherein the value of the ratio of the tensile elongation in the first direction of the separator (21) to the tensile elongation in the first direction of the positive electrode substrate (22) is from 15 to 48 in the state where the positive electrode (18) and the separator (21) are held in the case (11).

6. The energy storage device (10) according to any one of claims 1 to 5, wherein the value of the ratio of the tensile elongation in the second direction of the separator (21) to the tensile elongation in the second direction of the positive electrode substrate (22) is from 15 to 48 in the state where the positive electrode (18) and the separator (21) are held in the case (11).

7. The energy storage device (10) according to any one of claims 1 to 6, wherein the value of the ratio of the thickness of the heat-resistant layer (31) to the thickness of the positive electrode substrate (22) is from 0.30 to 0.60.

8. The energy storage device (10) according to any one of claims 1 to 7, wherein the value of the ratio of the thickness of the heat-resistant layer (31) to the thickness of the positive electrode substrate (22) is from 0.40 to 0.60.

9. The energy storage device (10) according to any one of claims 1 to 8, wherein the proportion by mass of the heat-resistant particles contained in the heat-resistant layer (31) is from 50 to 97% by mass of the heat-resistant layer (31).

10. The energy storage device (10) according to any one of claims 1 to 9, wherein the proportion by mass of the heat-resistant particles contained in the heat-resistant layer (31) is from 81 to 95% by mass of the heat-resistant layer (31).

11. The energy storage device (10) according to any one of claims 1 to 10,
wherein the value of the ratio of the product of the tensile fracture strength in the first direction of the separator (21) and the thickness of the separator (21) to the product of the tensile fracture strength in the first direction of the positive electrode substrate (22) and the thickness of the positive electrode substrate (22) is from 0.48 to 0.96 in the state where the positive electrode (18) and the separator (21) are held in the case (11), and
the value of the ratio of the product of the tensile fracture strength in the second direction of the separator (21) and the thickness of the separator (21) to the product of the tensile fracture strength in the second direction of the positive electrode substrate (22) and the thickness of the positive electrode substrate (22) is from 0.48 to 0.96 in the state where the positive electrode (18) and the separator (21) are held in the case (11).

12. The energy storage device (10) according to any one of claims 1 to 11,
wherein the value of the ratio of the product of the tensile fracture strength in the first direction of the separator (21) and the thickness of the separator (21) to the product of the tensile fracture strength in the first direction of the positive electrode substrate (22) and the thickness of the positive electrode substrate (22) is from 0.64 to 0.80 in the state where the positive electrode (18) and the separator (21) are held in the case (11), and
the value of the ratio of the product of the tensile fracture strength in the second direction of the separator (21) and the thickness of the separator (21) to the product of the tensile fracture strength in the second direction of the positive electrode substrate (22) and the thickness of the positive electrode substrate (22) is from 0.64 to 0.80 in the state where the positive electrode (18) and the separator (21) are held in the case (11).

13. An energy storage module comprising the energy storage device (10) according to any one of claims 1 to 12.

**Patentansprüche**

1. Energiespeichervorrichtung (10), die Folgendes umfasst:

eine positive Elektrode (18), in der eine positive Verbundschicht (23), die ein positives Verbundmaterial enthält, auf einem Positivelektrodensubstrat (22) ausgebildet ist;
eine negative Elektrode (19), in der eine negative Verbundschicht (25), die ein negatives Verbundmaterial enthält, auf einem Negativelektrodensubstrat (24) ausgebildet ist;
einen Separator (21), der zwischen der positiven (18) und der negativen (19) Elektrode angeordnet ist, wobei der Separator (21) ein Substrat (30) und eine wärmebeständige Schicht (31), die wärmebeständige Partikel enthält und auf dem Substrat (30) ausgebildet ist, umfasst; und
ein Gehäuse (11), in dem die positive Elektrode (18), die negative Elektrode (19) und der Separator (21) aufgenommen sind und das die Form eines im Wesentlichen rechteckigen Parallelflachs hat, das ein Paar langer Seitenflächen und ein Paar kurzer Seitenflächen aufweist,

**dadurch gekennzeichnet, dass**, wenn eine Richtung entlang eines ersten Randes der langen Seitenfläche, wobei der erste Rand teilweise den gesamten Umfangsrand der langen Seitenfläche bildet, als eine erste Richtung definiert ist und eine Richtung entlang eines zweiten Randes der langen Seitenfläche, wobei der zweite Rand orthogonal zu dem ersten Rand verläuft, als eine zweite Richtung definiert ist, ein Wert eines Verhältnisses einer Zugdehnung in der ersten Richtung des Separators (21) zu einer Zugdehnung in der ersten Richtung des Positivelektrodensubstrats (22) im Bereich von 4 bis 68 liegt, während sich die positive Elektrode (18) und der Separator (21) in dem Gehäuse (11) befinden,
ein Wert eines Verhältnisses einer Zugdehnung in der zweiten Richtung des Separators (21) zu einer Zugdehnung in der zweiten Richtung des Positivelektrodensubstrats (22) im Bereich von 4 bis 68 liegt, während sich die positive Elektrode (18) und der Separator (21) in dem Gehäuse (11) befinden,
ein Wert eines Verhältnisses einer Dicke der wärmebeständigen Schicht (31) zu einer Dicke des Positivelektrodensubstrats (22) im Bereich von 0,25 bis 0,70 liegt, und
ein Masseanteil der in der wärmebeständigen Schicht (31) enthaltenen wärmebeständigen Partikel im Bereich von 30 bis 99 Masse-% der wärmebeständigen Schicht (31) liegt.

2. Energiespeichervorrichtung (10) nach Anspruch 1, wobei ein Wert eines Verhältnisses eines Produkts einer Zugreißfestigkeit in der ersten Richtung des Separators (21) und einer Dicke des Separators (21) zu einem Produkt einer Zugreißfestigkeit in der ersten Richtung des Positivelektrodensubstrats (22) und der Dicke des Positivelektrodensubstrats (22) im Bereich von 0,40 bis 1,12 liegt, während sich die positive Elektrode (18) und der Separator (21) in dem Gehäuse (11) befinden, und ein Wert eines Verhältnisses eines Produkts einer Zugreißfestigkeit in der zweiten Richtung des Separators (21) und der Dicke des Separators (21) zu einem Produkt einer Zugreißfestigkeit in der zweiten Richtung des Positivelektrodensubstrats (22) und der Dicke des Positivelektrodensubstrats (22) im Bereich von 0,40 bis 1,12 liegt, während sich die positive Elektrode (18) und der Separator (21) in dem Gehäuse (11) befinden.

3. Energiespeichervorrichtung (10) nach Anspruch 1 oder 2, wobei die negative Verbundschicht (25) Styrol-Butadien-Kautschuk (Styrene-Butadiene Rubber, SBR) umfasst.

4. Energiespeichervorrichtung (10) nach einem der Ansprüche 1 bis 3, wobei die wärmebeständigen Partikel eine Gewichtsverringerung von 5 % oder weniger bei 500 °C in der Atmosphäre aufweisen.

5. Energiespeichervorrichtung (10) nach einem der Ansprüche 1 bis 4, wobei der Wert des Verhältnisses der Zugdehnung in der ersten Richtung des Separators (21) zu der Zugdehnung in der ersten Richtung des Positivelektrodensubstrats (22) im Bereich von 15 bis 48 liegt, während sich die positive Elektrode (18) und der Separator (21) in dem Gehäuse (11) befinden.

6. Energiespeichervorrichtung (10) nach einem der Ansprüche 1 bis 5, wobei der Wert des Verhältnisses der Zugdehnung in der zweiten Richtung des Separators (21) zu der Zugdehnung in der zweiten Richtung des Positivelektrodensubstrats (22) im Bereich von 15 bis 48 liegt, während sich die positive Elektrode (18) und der Separator (21) in dem Gehäuse (11) befinden.

7. Energiespeichervorrichtung (10) nach einem der Ansprüche 1 bis 6, wobei der Wert des Verhältnisses der Dicke der wärmebeständigen Schicht (31) zur Dicke des Positivelektrodensubstrats (22) im Bereich von 0,30 bis 0,60 liegt.

8. Energiespeichervorrichtung (10) nach einem der Ansprüche 1 bis 7, wobei der Wert des Verhältnisses der Dicke der wärmebeständigen Schicht (31) zur Dicke des Positivelektrodensubstrats (22) im Bereich von 0,40 bis 0,60 liegt.

9. Energiespeichervorrichtung (10) nach einem der Ansprüche 1 bis 8, wobei der Masseanteil der in der wärmebeständigen Schicht (31) enthaltenen wärmebeständigen Partikel im Bereich von 50 bis 97 Masse-% der wärmebeständigen Schicht (31) liegt.

10. Energiespeichervorrichtung (10) nach einem der Ansprüche 1 bis 9, wobei der Masseanteil der in der wärmebeständigen Schicht (31) enthaltenen wärmebeständigen Partikel im Bereich von 81 bis 95 Masse-% der wärmebeständigen Schicht (31) liegt.

11. Energiespeichervorrichtung (10) nach einem der Ansprüche 1 bis 10,
wobei der Wert des Verhältnisses des Produkts der Zugreißfestigkeit in der ersten Richtung des Separators (21) und der Dicke des Separators (21) zum Produkt der Zugreißfestigkeit in der ersten Richtung des Positivelektrodensubstrats (22) und der Dicke des Positivelektrodensubstrats (22) im Bereich von 0,48 bis 0,96 liegt, während sich die positive Elektrode (18) und der Separator (21) in dem Gehäuse (11) befinden, und
der Wert des Verhältnisses des Produkts der Zugreißfestigkeit in der zweiten Richtung des Separators (21) und der Dicke des Separators (21) zum Produkt der Zugreißfestigkeit in der zweiten Richtung des Positivelektrodensubstrats (22) und der Dicke des Positivelektrodensubstrats (22) im Bereich von 0,48 bis 0,96 liegt, während sich die positive Elektrode (18) und der Separator (21) in dem Gehäuse (11) befinden.

12. Energiespeichervorrichtung (10) nach einem der Ansprüche 1 bis 11, wobei der Wert des Verhältnisses des Produkts der Zugreißfestigkeit in der ersten Richtung des Separators (21) und der Dicke des Separators (21) zum Produkt der Zugreißfestigkeit in der ersten Richtung des Positivelektrodensubstrats (22) und der Dicke des Positivelektrodensubstrats (22) im Bereich von 0,64 bis 0,80 liegt, während sich die positive Elektrode (18) und der Separator (21) in dem Gehäuse (11) befinden, und
der Wert des Verhältnisses des Produkts der Zugreißfestigkeit in der zweiten Richtung des Separators (21) und der Dicke des Separators (21) zum Produkt der Zugreißfestigkeit in der zweiten Richtung des Positivelektrodensubstrats (22) und der Dicke des Positivelektrodensubstrats (22) im Bereich von 0,64 bis 0,80 liegt, während sich die positive Elektrode (18) und der Separator (21) in dem Gehäuse (11) befinden.

**13.** Energiespeichermodul, das die Energiespeichervorrichtung (10) nach einem der Ansprüche 1 bis 12 umfasst.

**Revendications**

**1.** Dispositif d'accumulation d'énergie (10) comprenant :

une électrode positive (18) dans laquelle une couche de composite positif (23) contenant un composite positif est formée sur un substrat d'électrode positive (22) ;
une électrode négative (19) dans laquelle une couche de composite négatif (25) contenant un composite négatif est formée sur un substrat d'électrode négative (24) ;
un séparateur (21) intercalé entre les électrodes positive (18) et négative (19), le séparateur (21) comprenant un substrat (30) et une couche résistant à la chaleur (31) qui contient des particules résistant à la chaleur et qui est formée sur le substrat (30) ; et
un boîtier (11) qui renferme l'électrode positive (18), l'électrode négative (19) et le séparateur (21) et qui a la forme d'un parallélépipède sensiblement rectangulaire pour présenter une paire de faces du côté long et une paire de faces du côté court,

**caractérisé en ce que** lorsqu'une direction le long d'un premier bord de la face du côté long, le premier bord constituant partiellement le bord périphérique complet de la face du côté long, est définie comme une première direction, et qu'une direction le long d'un second bord de la face du côté long, le second bord étant orthogonal au premier bord, est définie comme une seconde direction, une valeur de rapport d'allongement par traction dans la première direction du séparateur (21) à un allongement par traction dans la première direction du substrat d'électrode positive (22) est de 4 à 68, dans un état où l'électrode positive (18) et le séparateur (21) sont renfermés dans le boîtier (11),
une valeur de rapport d'allongement par traction dans la seconde direction du séparateur (21) à un allongement par traction dans la seconde direction du substrat d'électrode positive (22) est de 4 à 68, dans un état où l'électrode positive (18) et le séparateur (21) sont renfermés dans le boîtier (11),
une valeur de rapport d'une épaisseur de la couche résistant à la chaleur (31) à une épaisseur du substrat d'électrode positive (22) est de 0,25 à 0,70, et
une proportion en masse des particules résistant à la chaleur contenues dans la couche résistant à la chaleur (31) est de 30 à 99 % en masse de la couche résistant à la chaleur (31).

**2.** Dispositif d'accumulation d'énergie (10) selon la revendication 1, dans lequel :

une valeur de rapport du produit d'une résistance à la rupture par traction dans la première direction du séparateur (21) et d'une épaisseur du séparateur (21) au produit d'une résistance à la rupture par traction dans la première direction du substrat d'électrode positive (22) et de l'épaisseur du substrat d'électrode positive (22) est de 0,40 à 1,12, dans l'état où l'électrode positive (18) et le séparateur (21) sont renfermés dans le boîtier (11), et
une valeur de rapport du produit d'une résistance à la rupture par traction dans la seconde direction du séparateur (21) et de l'épaisseur du séparateur (21) au produit d'une résistance à la rupture par traction dans la seconde direction du substrat d'électrode positive (22) et de l'épaisseur du substrat d'électrode positive (22) est de 0,40 à 1,12, dans l'état où l'électrode positive (18) et le séparateur (21) sont renfermés dans le boîtier (11).

**3.** Dispositif d'accumulation d'énergie (10) selon la revendication 1 ou 2, dans lequel la couche de composite négatif (25) comprend du caoutchouc styrène-butadiène (SBR).

**4.** Dispositif d'accumulation d'énergie (10) selon l'une quelconque des revendications 1 à 3, dans lequel les particules résistant à la chaleur présentent une réduction de poids de 5 % ou moins, à 500 °C dans l'atmosphère.

**5.** Dispositif d'accumulation d'énergie (10) selon l'une quelconque des revendications 1 à 4, dans lequel la valeur du rapport d'allongement par traction dans la première direction du séparateur (21) à l'allongement par traction dans la première direction du substrat d'électrode positive (22) est de 15 à 48, dans l'état où l'électrode positive (18) et le séparateur (21) sont renfermés dans le boîtier (11).

**6.** Dispositif d'accumulation d'énergie (10) selon l'une quelconque des revendications 1 à 5, dans lequel la valeur du rapport d'allongement par traction dans la seconde direction du séparateur (21) à l'allongement par traction dans la seconde direction du substrat d'électrode positive (22) est de 15 à 48, dans l'état où l'électrode positive (18) et le séparateur (21) sont renfermés dans le boîtier (11).

7. Dispositif d'accumulation d'énergie (10) selon l'une quelconque des revendications 1 à 6, dans lequel la valeur du rapport de l'épaisseur de la couche résistant à la chaleur (31) à l'épaisseur du substrat d'électrode positive (22) est de 0,30 à 0,60.

8. Dispositif d'accumulation d'énergie (10) selon l'une quelconque des revendications 1 à 7, dans lequel la valeur du rapport de l'épaisseur de la couche résistant à la chaleur (31) à l'épaisseur du substrat d'électrode positive (22) est de 0,40 à 0,60.

9. Dispositif d'accumulation d'énergie (10) selon l'une quelconque des revendications 1 à 8, dans lequel la proportion en masse des particules résistant à la chaleur contenues dans la couche résistant à la chaleur (31) est de 50 à 97 % en masse de la couche résistant à la chaleur (31).

10. Dispositif d'accumulation d'énergie (10) selon l'une quelconque des revendications 1 à 9, dans lequel la proportion en masse des particules résistant à la chaleur contenues dans la couche résistant à la chaleur (31) est de 81 à 95 % en masse de la couche résistant à la chaleur (31).

11. Dispositif d'accumulation d'énergie (10) selon l'une quelconque des revendications 1 à 10, dans lequel la valeur du rapport du produit de la résistance à la rupture par traction dans la première direction du séparateur (21) et de l'épaisseur du séparateur (21) au produit de la résistance à la rupture par traction dans la première direction du substrat d'électrode positive (22) et de l'épaisseur du substrat d'électrode positive (22) est de 0,48 à 0,96, dans l'état où l'électrode positive (18) et le séparateur (21) sont renfermés dans le boîtier (11), et la valeur du rapport du produit de la résistance à la rupture par traction dans la seconde direction du séparateur (21) et de l'épaisseur du séparateur (21) au produit de la résistance à la rupture par traction dans la seconde direction du substrat d'électrode positive (22) et de l'épaisseur du substrat d'électrode positive (22) est de 0,48 à 0,96, dans l'état où l'électrode positive (18) et le séparateur (21) sont renfermés dans le boîtier (11).

12. Dispositif d'accumulation d'énergie (10) selon l'une quelconque des revendications 1 à 11, dans lequel la valeur du rapport du produit de la résistance à la rupture par traction dans la première direction du séparateur (21) et de l'épaisseur du séparateur (21) au produit de la résistance à la rupture par traction dans la première direction du substrat d'électrode positive (22) et de l'épaisseur du substrat d'électrode positive (22) est de 0,64 à 0,80, dans l'état où l'électrode positive (18) et le séparateur (21) sont renfermés dans le boîtier (11), et la valeur du rapport du produit de la résistance à la rupture par traction dans la seconde direction du séparateur (21) et de l'épaisseur du séparateur (21) au produit de la résistance à la rupture par traction dans la seconde direction du substrat d'électrode positive (22) et de l'épaisseur du substrat d'électrode positive (22) est de 0,64 à 0,80, dans l'état où l'électrode positive (18) et le séparateur (21) sont renfermés dans le boîtier (11).

13. Module d'accumulation d'énergie comprenant le dispositif d'accumulation d'énergie (10) selon l'une quelconque des revendications 1 à 12.

# FIG. 1

# FIG. 2

# FIG. 3

# FIG. 4

# FIG. 5

**EP 2 816 636 B1**

**REFERENCES CITED IN THE DESCRIPTION**

**Patent documents cited in the description**

- JP 2010171017 A
- US 2010068627 A1
- US 2011136010 A1
- US 2007190407 A1
- US 2007224496 A1